# EUROPÄISCHE PATENTSCHRIFT

(11) **EP 2 929 212 B1**
(45) Veröffentlichungstag und Bekanntmachung des Hinweises auf die Patenterteilung: **06.06.2018**
(21) Anmeldenummer: 13817864.5
(22) Anmeldetag: 14.11.2013
(51) Int. Cl.: F16F 15/131, F16F 15/14

(54) **DREHMOMENTÜBERTRAGUNGSEINRICHTUNG, BAUEINHEIT FÜR DIESE UND VERFAHREN ZUR HERSTELLUNG DER DREHMOMENTÜBERTRAGUNGSEINRICHTUNG**
TORQUE TRANSMISSION ARRANGEMENT, UNIT FOR SAID ARRANGEMENT AND METHOD FOR PRODUCING THE TORQUE TRANSMISSION DEVICE
DISPOSITIF DE TRANSMISSION DE COUPLE, UNITÉ DE CONSTRUCTION POUR CE DISPOSITIF ET PROCÉDÉ DE FABRICATION DU DISPOSITIF DE TRANSMISSION DE COUPLE

(30) Priorität: 04.12.2012 DE 102012222247; 21.01.2013 DE 102013200900
(43) Veröffentlichungstag der Anmeldung: 14.10.2015
(73) Patentinhaber: Schaeffler Technologies AG & Co. KG, 91074 Herzogenaurach (DE)
(72) Erfinder: AHNERT, Gerd, 77880 Sasbach (DE)
(86) Internationale Anmeldenummer: PCT/DE2013/200301
(87) Internationale Veröffentlichungsnummer: WO 2014/086355

(56) Entgegenhaltungen:
- DE-A1- 10 331 391
- DE-A1- 19 627 764
- DE-A1- 19 954 272
- DE-A1- 19 954 273
- DE-A1-102011 105 009

## Beschreibung

Die Erfindung betrifft eine Drehmomentübertragungseinrichtung für einen Antriebsstrang eines Kraftfahrzeugs, ein Verfahren zu deren Herstellung mit einem an einer Kurbelwelle aufgenommenen Drehantriebsteil, einem mit dem Drehantriebsteil verbundenen Anlasserzahnkranz und einem Fliehkraftpendel mit einer koaxial zum Drehantriebsteil angeordneten Flanscheinrichtung und daran über den Umfang verteilten gegenüber diesem begrenzt verlagerbaren Pendelmassen.

Gattungsgemäße Drehmomentübertragungseinrichtungen in Antriebssträngen von Kraftfahrzeugen sind zwischen der Brennkraftmaschine und dem Getriebe angeordnet und übertragen das Drehmoment von der Kurbelwelle auf zumindest eine Getriebeeingangswelle. Hybridische Antriebsstränge können weiterhin eine Elektromaschine aufweisen, die die Brennkraftmaschine unterstützt. Zur Übertragung des Drehmoments der Brennkraftmaschine weisen gattungsgemäße Drehmomentübertragungseinrichtungen ein Drehantriebsteil auf, das mit der Kurbelwelle verbunden ist und an dem ein Anlasserzahnkranz zum Start der Brennkraftmaschine mittels eines Anlassers befestigt ist. Das Drehantriebsteil steht mit weiteren nachfolgenden Komponenten in Antriebsverbindung, welche abhängig von den ausgewählten Eigenschaften des Antriebsstrangs entsprechend ausgestaltet sind. In ausreichend bekannter Weise kann zur Steuerung des von der Kurbelwelle auf die zumindest eine Getriebeeingangswelle übertragenen Moments zumindest eine Trenn- oder Anfahrkupplung in Form einer Schalt- und/oder Reibungskupplung in der Drehmomentübertragungseinrichtung vorgesehen sein. Desweiteren können in ausreichend bekannter Weise zur Schwingungsisolation von Drehschwingungen der Brennkraftmaschine Drehschwingungsisolationseinrichtungen vorgesehen sein, die aus Drehschwingungsdämpfern wie Zweimassenschwungrädern, Torsionsschwingungsdämpfern in Kupplungsscheiben und dergleichen und/oder Drehschwingungstilgern wie Massetilgern, drehzahladaptiven Tilgern und dergleichen gebildet sind. Beispielsweise ist aus der DE 10 2011 085 865 A1 ein drehzahladaptiver Drehschwingungstilger in Form eines Fliehkraftpendels in einer Reibungskupplung bekannt. In der DE 10 2009 021 355 A1 ist ein Fliehkraftpendel in einer Kupplungsscheibe einer Reibungskupplung aufgenommen. Die DE 10 2010 051 436 A1 zeigt eine Drehmomentübertragungseinrichtung mit einem Drehschwingungsdämpfer, einem Fliehkraftpendel und zwei Reibungskupplungen für ein Doppelkupplungsgetriebe. Aus der nicht vorveröffentlichten deutschen Anmeldung mit der Nr. 10 2012 212 970.7 der Anmelderin ist eine Drehmomentübertragungseinrichtung bekannt, bei der an dem Drehantriebsteil ein Anlasserzahnkranz und ein Fliehkraftpendel aufgenommen sind. Die Montage der Drehmomentübertragungseinrichtung erfolgt mittels einer Baueinheit durch Fügen des Fliehkraftpendels und des Anlasserzahnkranzes an gemeinsamen Aufnahmen am Drehantriebsteil. Aus der DE19954273 ist eine Drehmomentenübertragungseinrichtung bekannt, bei der Anlasserkranz und Fliehkraftpendel über eine Deckplatte oder separat und nacheinander an dem Drehantriebsteil befestigt sind. Aufgabe der Erfindung ist, eine Drehmomentübertragungseinrichtung und ein Verfahren zu deren Herstellung zur Vereinfachung der Montage und Erhöhung deren Festigkeit vorzuschlagen.

Die Aufgabe wird durch den Gegenstand von Anspruch 1 und das Verfahren gemäß Anspruch 10 gelöst. Die auf den Anspruch 1 rückbezogenen Unteransprüche geben vorteilhafte Ausführungsformen wieder.

Die vorgeschlagene Drehmomentübertragungseinrichtung für einen Antriebsstrang eines Kraftfahrzeugs weist ein mit der Kurbelwelle einer Brennkraftmaschine verbundenes Drehantriebsteil auf, das einteilig oder mehrteilig aus Blech-, Guss- und/oder Schmiedeteilen gebildet sein kann. Je nach Ausbildung des Antriebsstrangs kann das Drehantriebsteil ein Einmassenschwungrad, eine primäre Schwungmasse eines Zweimassenschwungrads, ein Eingangsteil einer Doppelkupplung, eine Gegendruckplatte einer Reibungskupplung, ein Antriebsblech wie Flexplate eines hydrodynamischen Drehmomentwandlers oder dergleichen sein. Das Drehantriebsteil oder ein diesem im Drehmomentverlauf nachgeordnetes Bauteil des Antriebsstrangs kann mit einem Rotor einer Elektromaschine koppelbar sein, um einen hybridischen Antriebsstrang vorzusehen.

Das verwendete Fliehkraftpendel ist in der vorgeschlagenen Baueinheit aufgenommen, die wiederum drehstarr mit dem Drehantriebsteil verbunden ist, so dass das Fliehkraftpendel in gleicher Weise drehstarr um die Drehachse der Kurbelwelle und damit koaxial zu dieser drehstarr angeordnet ist. Das Fliehkraftpendel weist eine Flanscheinrichtung auf, welche Pendelmassen begrenzt verlagerbar aufnimmt. Die Pendelmassen sind hierzu gegenüber der Flanscheinrichtung gleit- beziehungsweise bevorzugt wälzgelagert. Durch die Vorgabe von Verlagerungsgeometrien der Pendelmassen gegenüber der Flanscheinrichtung können monofilare, bifilare oder ähnliche Pendelbewegungen der Pendelmassen gegenüber der Flanscheinrichtung erzielt werden. Weiterhin können bifilar aufgehängte Trapez- oder Parallelpendel oder ähnliche Pendelformen vorgesehen werden. Der Schwingwinkel und/oder eine schwerkraftbedingte Rückverlagerung von im Stillstand über der Drehachse verbleibenden Pendelmassen können durch Anschläge und dergleichen begrenzt werden. Die Lagerung der Pendelmassen erfolgt bevorzugt an Laufbahnen von Ausschnitten in der Flanscheinrichtung und gegebenenfalls in den Pendelmassen mittels auf den Laufbahnen abwälzenden Wälzkörpern.

Gemäß einer vorteilhaften Ausführungsform können Pendelmassen beidseitig an einem Flanschteil der Flanscheinrichtung angeordnet sein und axial gegenüberliegende Pendelmassen jeweils miteinander fest zu an dem Flanschteil gelagerten Pendelmassenpaaren verbunden sein. Hierbei weisen die Pendelmassen und das Flanschteil in bevorzugter Weise Ausschnitte mit Laufbahnen auf, auf denen jeweils ein Wälzkörper abwälzt. Die axial gegenüber liegenden Pendelmassen sind mittels Verbindungsmitteln wie Abstandsbolzen und dergleichen verbunden, die Aussparungen zumindest in Größe des erforderlichen Schwingwinkels der Pendelmassen im Flanschteil durchgreifen. Auf diese Weise können über den Umfang verteilt beispielsweise zwei bis acht, bevorzugt vier bis sechs Pendelmassenpaare mit jeweils beidseitig des Flanschteils angeordneten Pendelmassen vorgesehen sein.

Alternativ können bevorzugt in einer Ebene über den Umfang angeordnete Pendelmassen vorgesehen sein, die in einem zwischen Trägerscheiben der Flanscheinrichtung ausgebildeten Ringraum aufgenommen und in den Trägerscheiben gelagert sind. Die Trägerscheiben können jeweils für sich radial außen mit dem Anlasserzahnkranz verbunden sein. Alternativ können die Trägerteile miteinander verbunden und eines der Trägerteile mit dem Anlasserzahnkranz verbunden sein.

Die vorgeschlagene Baueinheit enthält den Anlasserzahnkranz, der eine Drehschlussverbindung zu einem Anlasser bildet. Dieser Anlasser dient dem Start der Brennkraftmaschine und kann zum Start in den Anlasserzahnkranz eingespurt oder in permanentem Eingriff ausgebildet sein und zum Start bestromt werden. Der Anlasserzahnkranz umgibt die Flanscheinrichtung und stützt diese radial, so dass diese entsprechend ausgelegt werden kann. Beispielsweise kann der Anlasserzahnkranz als Berstschutz für das Fliehkraftpendel dienen, der im Berstfall des Fliehkraftpendels nach außen beschleunigte Bauteile des Fliehkraftpendels zumindest abbremst. In speziellen Ausführungsformen kann eine ringförmig geschlossene Ausbildung der Flanscheinrichtung eingespart werden, so dass zur Aufnahme der Pendelmassen über den Umfang verteilte und jeweils nach radial innen erweiterte Laschen die Flanscheinrichtung bilden können. Alternativ oder zusätzlich können Anlasserzahnkranz und Flanscheinrichtung einteilig ausgebildet sein. Der Anlasserzahnkranz bildet bevorzugt die einzige Verbindung zum Drehantriebsteil. Beispielsweise können Befestigungsmittel Öffnungen sein, in die zu diesen komplementäre, einen Formschluss mit diesen bildende Befestigungsmittel wie Bolzen, Niete, Schrauben eingreifen oder durchgreifen und auf der anderen Seite gekontert werden. Die Öffnungen können Innengewinde sein, in die als Schrauben ausgebildete Befestigungsmittel eingreifen. Alternativ können an dem Anlasserzahnkranz axial ausgreifende Befestigungsmittel vorgesehen sein, die in entsprechende Öffnungen des Drehantriebsteils eingreifen oder dieses durchgreifen.

Die Baueinheit ist in bevorzugter Weise gegenüber dem Drehantriebsteil zentriert aufgenommen. Hierzu können Baueinheit und Drehantriebsteil mittels entsprechender Zentriermittel aufeinander zentriert werden und anschließend miteinander mittels der Befestigungsmittel verbunden werden. Gemäß einer ersten Ausführungsform kann die Flanscheinrichtung die Zentriermittel der Baueinheit aufweisen. Das Drehantriebsteil kann radial innen entsprechende komplementäre Zentriermittel aufweisen, beispielsweise Zentriernasen oder dergleichen. Alternativ kann eine Zentrierung radial außen zwischen Anlasserzahnkranz und Drehantriebsteil vorgesehen sein.

Gemäß einer vorteilhaften Ausführungsform kann an der Baueinheit ein Sensorgeberring aufgenommen sein. Dieser Sensorring kann an dem Anlasserzahnkranz oder an der Flanscheinrichtung befestigt sein und ist beispielsweise aus einem radial außen axial umgelegten Blechring gebildet, wobei der axial umgelegte Absatz beispielsweise durch entsprechende Ausstanzungen die Sensorgebermarkierungen enthält, deren Wechsel über die Zeit beispielsweise von einem induktiv sensitiven Sensor zur Ermittlung von Drehkennwerten der Kurbelwelle erfasst wird. In einer besonders vorteilhaften Ausführungsform ist der Sensorgeberring aus einem der beiden Trägerteile gebildet. Hierbei erfolgt die axiale Umlegung der Sensorgebermarkierung auf die abgewandte Seite des Anlasserzahnkranzes in Richtung der Brennkraftmaschine oder in Richtung des Getriebes bevorzugt das Drehantriebsteil axial übergreifend. Hierzu wird insbesondere unabhängig von einer unmittelbaren Anlage des Anlasserzahnkranzes an dem Drehantriebsteil eine Drehmomentübertragungseinrichtung mit einer entsprechenden Baueinheit vorgeschlagen, bei dem der Sensorgeberring zwischen dem Anlasserzahnkranz und dem Drehantriebsteil radial nach außen geführt ist. Alternativ kann eine unmittelbare Befestigung des Anlasserzahnkranzes an dem Drehantriebsteil vorgesehen werden, indem der Sensorgeberring im Bereich der Befestigungsmittel und Anlageflächen von Anlasserzahnkranz und Drehantriebsteil entsprechende Aussparungen wie Ausnehmungen aufweist.

Die Aufgabe wird im Weiteren durch eine Baueinheit für eine Drehmomentübertragungseinrichtung mit einem Anlasserzahnkranz, einem mit dem Anlasserzahnkranz verbundenen Fliehkraftpendel sowie Befestigungsmitteln des Anlasserzahnkranzes in unmittelbarer Zusammenwirkung mit komplementären Befestigungsmitteln zur Aufnahme an dem Drehantriebsteil gelöst.

Die Drehmomentübertragungseinrichtung ist vorteilhafterweise an eine radial nach außen vorgegebene Außenkontur der Brennkraftmaschine unter Einhaltung eines vorgegebenen, bevorzugt radial im Wesentlichen konstanten Spalts angepasst. Hierzu ist die Baueinheit in die Außenkontur des Drehantriebteils integriert. Das Drehantriebsteil ist dabei zur Aufnahme der Baueinheit entsprechend ausgespart. Alternativ oder zusätzlich kann das Drehantriebsteil gegenüber einem Aufnahmebereich an der Kurbelwelle in Richtung des Getriebes in einem Radialbereich der Baueinheit axial versetzt sein.

Ein als Gegendruckplatte einer Reibungskupplung ausgebildetes Drehantriebsteil kann mit Befestigungsmitteln vorgesehen sein, welche neben der Baueinheit zugleich einen Kupplungsdeckel mit dem Drehantriebsteil verbinden.

In dem vorgeschlagenen Verfahren zur Herstellung der vorgeschlagenen Drehmomentübertragungseinrichtung ist vorgesehen, aus einem Anlasserzahnkranz und einem aus einer Flanscheinrichtung und Pendelmassen gebildeten Fliehkraftpendel eine Baueinheit herzustellen und die Baueinheit mittels des Anlasserzahnkranzes unmittelbar an einem Drehantriebsteil der Drehmomentübertragungseinrichtung zentriert aufzunehmen und mit diesem fest zu verbinden. Hierbei kann der Zusammenbau vereinfacht werden, indem die Baueinheit vorgefertigt und beispielsweise in der Endmontage die vorgefertigte Baueinheit mit dem Drehantriebsteil verbunden, bevorzugt verschraubt wird. Hierbei sind in der Endmontage lediglich Schraubwerkzeuge notwendig. Eine Vernietung oder eine Schweißverbindung entfällt, so dass unter entsprechenden Raumbedingungen gearbeitet werden kann. Dabei erfolgt die Zentrierung ohne Zentrierhilfen durch Anbringen entsprechender, komplementär zueinander ausgebildeter Zentriermittel an der Baueinheit und an dem Drehantriebsteil.

Die Erfindung wird anhand der in den Figuren 1 bis 7 dargestellten Ausführungsformen näher erläutert. Dabei zeigen:
- Figur 1: eine Baueinheit einer Drehmomentübertragungseinrichtung mit Fliehkraftpendel und Anlasserzahnkranz in Ansicht,
- Figur 2: einen Teilschnitt durch eine Drehmomentübertragungseinrichtung mit der Baueinheit der Figur 1,
- Figur 3: einen Teilschnitt durch eine Drehmomentübertragungseinrichtung mit einer gegenüber der Baueinheit der Figur 1 abgeänderten Baueinheit,
- Figur 4: einen Teilschnitt durch die Drehmomentübertragungseinrichtung der Figur 2 vor der Endmontage,
- Figur 5: einen Teilschnitt durch die Drehmomentübertragungseinrichtung der Figur 4 nach der Endmontage,
- Figur 6: einen Teilschnitt durch eine Drehmomentübertragungseinrichtung mit einer Baueinheit mit einem Sensorgeberring
- und Figur 7: einen Teilschnitt durch eine Drehmomentübertragungseinrichtung mit einer gegenüber der Baueinheit der Figur 1 geänderten Zentrierung.

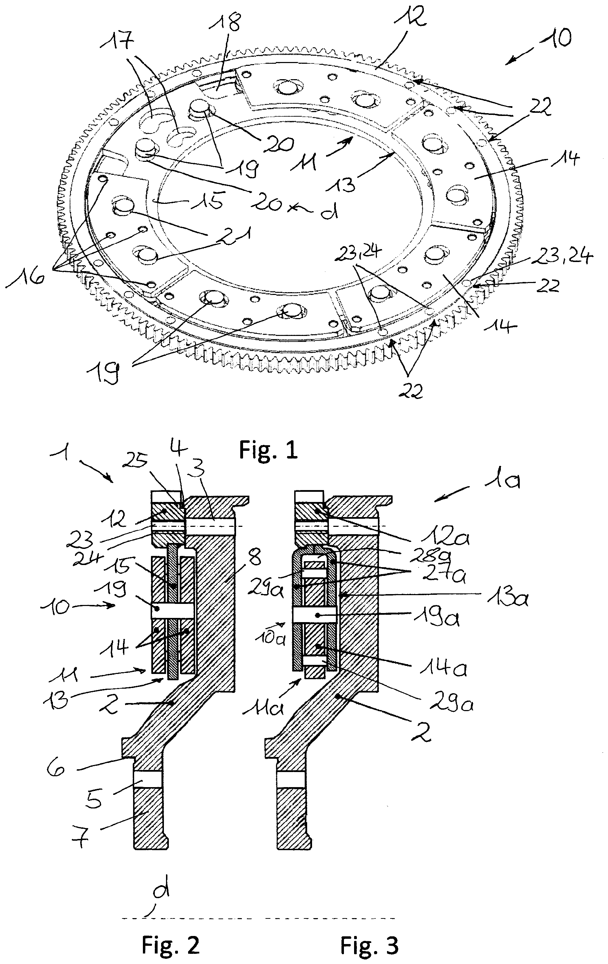

Figur 1 zeigt die Baueinheit 10 mit dem Fliehkraftpendel 11 und dem Anlasserzahnkranz 12 in Ansicht. Das Fliehkraftpendel 11 ist aus der Flanscheinrichtung 13 und den Pendelmassen 14 gebildet. In dem gezeigten Ausführungsbeispiel ist die Flanscheinrichtung 13 aus einem einzigen Flanschteil 15 gebildet an dem beidseitig über den Umfang verteilt jeweils sechs Pendelmassen 14 angeordnet sind. Zum besseren Blick auf das Flanschteil 15 ist eine dieser Pendelmassen 14 abgenommen. Bezogen auf die Drehachse d der Baueinheit sind axial gegenüberliegende Pendelmassen 14 mittels der Verbindungsmittel 16 zu Pendelmassenpaaren verbunden. Die Verbindungsmittel 16 durchgreifen dabei Ausschnitte 17, 18 in dem Flanschteil 15. Die Pendelmassenpaare sind jeweils zweifach mittels der Wälzkörper 19 an dem Flanschteil 15 gelagert. Hierzu sind in den Pendelmassen 14 und im Flanschteil 15 die Schwinggeometrie vorgebende Ausschnitte 20, 21 mit Laufbahnen, auf denen die Wälzkörper 19 abwälzen, vorgesehen. Die Flanscheinrichtung 13 ist an deren Außenumfang fest mit dem Innenumfang des Anlasserzahnkranzes 12 verbunden, beispielsweise verschweißt. Der Anlasserzahnkranz 12 stabilisiert das Fliehkraftpendel 11 mechanisch und kann als Berstschutz dienen. Der Anlasserzahnkranz 12 dient der unmittelbaren Aufnahme der Baueinheit 10 an einer Drehmomentübertragungseinrichtung und weist Befestigungsmittel 22 in Form von Öffnungen 23 wie Innengewinden 24 auf, in die zu diesen komplementäre Befestigungsmittel eingreifen und einen Formschluss bilden.

Die Figur 2 zeigt den oberen Teil der um die Drehachse d angeordneten Drehmomentübertragungseinrichtung 1 mit der Baueinheit 10 mit dem Anlasserzahnkranz 12, dem Fliehkraftpendel 11 mit der als Flanschteil 15 ausgebildeten Flanscheinrichtung, den Pendelmassen 14 und den Wälzkörpern 19 im Teilschnitt. An dem Drehantriebsteil 2 sind Öffnungen 3 mit vergrößertem Durchmesser gegenüber den Öffnungen 23 wie Innengewinden 24 vorgesehen, so dass nicht dargestellte Befestigungsmittel die Öffnungen durchgreifen können und die Baueinheit 10 mittels der an dem Anlasserzahnkranz 12 und an dem Drehantriebsteil 2 komplementär vorgesehene Zentriermittel 4, 25 wie beispielsweise über den Umfang verteilte Zentriernuten und -nasen zentriert werden kann. Das Drehantriebsteil 2 wird mittels Öffnungen 5 durchgreifender Schrauben und Zentriermitteln 6 an einer Kurbelwelle einer Brennkraftmaschine zentriert und befestigt. Um axialen Bauraum zu sparen, kann die Baueinheit 10 gegenüber dem an der Kurbelwelle aufgenommenen Ringbereich 7 in Getrieberichtung axial zurückgezogen, bevorzugt radial fluchtend zu diesem angeordnet werden. Hierzu ist der Ringbereich 8 des Drehantriebsteils 2 gegenüber dem Ringbereich 7 axial in Richtung des Getriebes, also in entgegengesetzte Richtung der Seite des Drehantriebsteils 2, an dem die Baueinheit 10 angeordnet ist, rückverlagert.

Die Figur 3 zeigt die Drehmomentübertragungseinrichtung 1a mit dem Drehantriebsteil 2 und dem gegenüber der Baueinheit 10 der Figuren 1 und 2 geänderter Baueinheit 10a. mit dem Anlasserzahnkranz 12a und dem Fliehkraftpendel 11a. Das Fliehkraftpendel 11a enthält lediglich in einer Ebene angeordnete Pendelmassen 14a. Die Flanscheinrichtung 13a ist hierbei aus den beiden radial außen mit dem Anlasserzahnkranz 12a fest verbundenen Trägerscheiben 27a gebildet. In dem von diesen gebildeten Ringraum 28a sind die Pendelmassen 14a über den Umfang verteilt angeordnet und mittels der Wälzkörper 19a verschwenkbar gelagert. Die Abstandshalter 29a stellen dabei einen konstanten Abstand zu den Trägerscheiben 27a ein und verhindern einen großflächigen Reibkontakt.

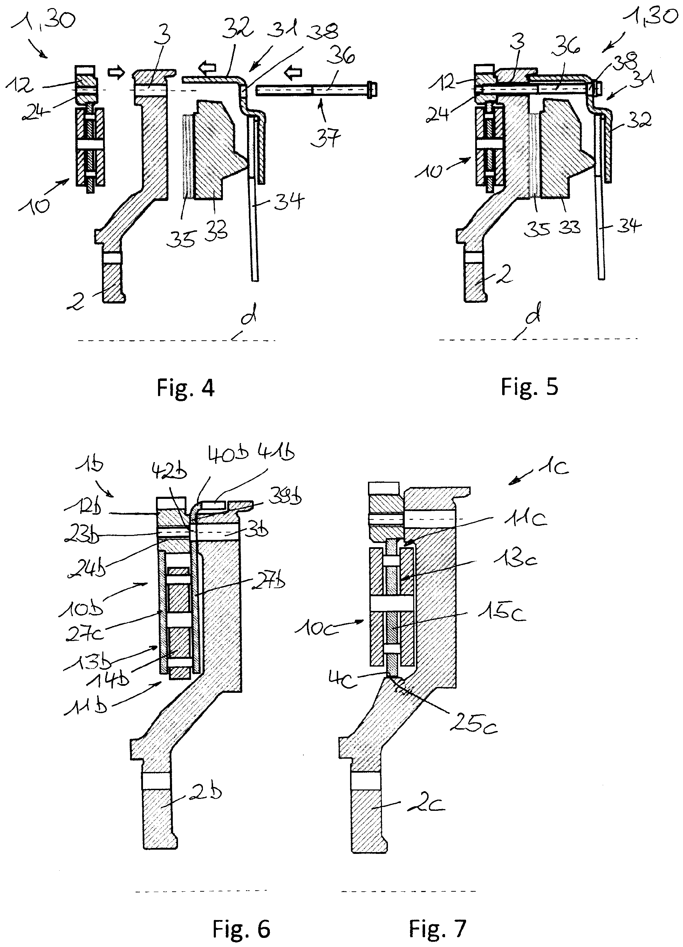

Die Figuren 4 und 5 zeigen die komplette, hier beispielsweise als Reibungskupplung 30 ausgebildete um die Drehachse d angeordnete Drehmomentübertragungseinrichtung 1 vor und nach der Endmontage im Teilschnitt. Vor der Endmontage liegen die vorgefertigte Baueinheit 10, das als Gegendruckplatte ausgebildete Drehantriebsteil 2 und die Baugruppe 31 mit Deckelteil 32, Anpressplatte 33, Tellerfeder 34 und gegebenenfalls nicht dargestellter Nachstelleinrichtung sowie die lediglich angedeutete Kupplungsscheibe 35 sowie die Befestigungsmittel 37 in Form der Schrauben 36 vor. Zur Montage werden die Baugruppen 10, 31 auf dem Drehantriebsteil 2 zentriert. Die Kupplungsscheibe 35 wird vor der Zentrierung der Baugruppe 31 zwischengelegt. Nach Zentrierung der Baugruppen 10, 31 werden die Schrauben 36 durch die Öffnungen 38, 3 geführt und in den Innengewinden 24 des Anlasserzahnkranzes verschraubt.

Die Figur 6 zeigt die gegenüber der Drehmomentübertragungseinrichtung 1a der Figur 3 abgewandelte Drehmomentübertragungseinrichtung 1b mit der Baueinheit 10b und dem Drehantriebsteil 2b im Teilschnitt. Im Unterschied zu dieser ist die dem Drehantriebsteil 2b zugewandte Trägerscheibe 27b einteilig mit dem Sensorgeberring 39b versehen. Hierzu erstreckt sich die Trägerscheibe 27b über den Anlasserzahnkranz 12b hinaus und ist axial umgelegt. Der axiale Ansatz 40b verfügt über die über den Umfang angeordneten Ausnehmungen 41b, welche die Erfassung von Drehkennwerten des Drehantriebsteils 2b und damit der Kurbelwelle ermöglichen. Der Sensorgeberring 39b ist mittels der Öffnungen 42b zusammen mit der Baueinheit 10b mit dem Drehantriebsteil 2b verbunden. Es versteht sich, dass zur direkten Aufnahme des Anlasserzahnkranzes 12b an dem Drehantriebsteil 2b die Trägerscheibe 27b der Flanscheinrichtung 13b des Fliehkraftpendels 11b mit den Pendelmassen 14b entsprechende Ausnehmungen im Bereich der Befestigungsmittel wie Öffnungen 23b oder Innengewinde 24b des Anlasserzahnkranzes und Öffnungen 3b des Drehantriebsteils zur Aufnahme von komplementären Befestigungsmitteln wie Schrauben Ausnehmungen aufweisen kann. Desweiteren kann bei einer Anordnung des Anlassers von der Getriebeseite her die Trägerscheibe 27c einen dem Sensorgeberring 39b entsprechenden Sensorgebering aufweisen.

Die Figur 7 zeigt im Teilschnitt die Drehmomentübertragungseinrichtung 1c, welche im Unterschied zu der Drehmomentübertragungseinrichtung der Figur 2 eine geänderte Zentrierung der Baueinheit 10c gegenüber dem Drehantriebsteil 2c aufweist. Die Zentrierung erfolgt hierbei zwischen dem Flanschteil 15c der Flanscheinrichtung 13c des Fliehkraftpendels 11c und dem Drehantriebsteil 2c. Hierzu sind in dem gezeigten Ausführungsbeispiel an dem Innenumfang des Flanschteils 15c und dem Drehantriebsteil 2c entsprechende Zentriermittel 4c, 25c vorgesehen.

### Bezugszeichenliste

- 1: Drehmomentübertragungseinrichtung
- 1a: Drehmomentübertragungseinrichtung
- 1b: Drehmomentübertragungseinrichtung
- 1c: Drehmomentübertragungseinrichtung
- 2: Drehantriebsteil
- 2b: Drehantriebsteil
- 2c: Drehantriebsteil
- 3: Öffnung
- 3b: Öffnung
- 4: Zentriermittel
- 4c: Zentriermittel
- 5: Öffnung
- 6: Zentriermittel
- 7: Ringbereich
- 8: Ringbereich
- 10: Baueinheit
- 10a: Baueinheit
- 10b: Baueinheit
- 10c: Baueinheit
- 11: Fliehkraftpendel
- 11a: Fliehkraftpendel
- 11b: Fliehkraftpendel
- 11c: Fliehkraftpendel
- 12: Anlasserzahnkranz
- 12a: Anlasserzahnkranz
- 12b: Anlasserzahnkranz
- 13: Flanscheinrichtung
- 13a: Flanscheinrichtung
- 13b: Flanscheinrichtung
- 13c: Flanscheinrichtung
- 14: Pendelmasse
- 14a: Pendelmasse
- 14b: Pendelmasse
- 15: Flanschteil
- 15c: Flanschteil
- 16: Verbindungsmittel
- 17: Ausschnitt
- 18: Ausschnitt
- 19: Wälzkörper
- 19a: Wälzkörper
- 20: Ausschnitt
- 21: Ausschnitt
- 22: Befestigungsmittel
- 23: Öffnung
- 23b: Öffnung
- 24: Innengewinde
- 24b: Innengewinde
- 25: Zentriermittel
- 25c: Zentriermittel
- 27a: Trägerscheibe
- 27b: Trägerscheibe
- 27c: Trägerscheibe
- 28a: Ringraum
- 29a: Abstandshalter
- 30: Reibungskupplung
- 31: Baugruppe
- 32: Deckelteil
- 33: Anpressplatte
- 34: Tellerfeder
- 35: Kupplungsscheibe
- 36: Schrauben
- 37: Befestigungsmittel
- 38: Öffnung
- 39b: Sensorgeberring
- 40b: Ansatz
- 41b: Ausnehmung
- 42b: Öffnung
- d: Drehachse

## Patentansprüche

1. Drehmomentübertragungseinrichtung (1, 1a, 1b, 1c) für einen Antriebsstrang eines Kraftfahrzeugs mit einem an einer Kurbelwelle aufgenommenen Drehantriebsteil (2, 2b, 2c), einem mit dem Drehantriebsteil (2, 2b, 2c) verbundenen Anlasserzahnkranz (12, 12a, 12b) und einem Fliehkraftpendel (11, 11a, 11b, 11c) mit einer koaxial zum Drehantriebsteil (2, 2b, 2c) angeordneten Flanscheinrichtung (13, 13a, 13b, 13c) und daran über den Umfang verteilten gegenüber diesem begrenzt verlagerbaren Pendelmassen (14, 14a, 14b), **dadurch gekennzeichnet, dass** Anlasserzahnkranz (12, 12a, 12b) und Fliehkraftpendel (11, 11a, 11b, 11c) eine vormontierte und in vormontiertem Zustand an dem Drehantriebsteil (2, 2b, 2c) aufgenommene und ausschließlich mittels des Anlasserzahnkranzes (12, 12a, 12b) an dem Drehantriebsteil (2, 2b, 2c) befestigte Baueinheit (10, 10a, 10b, 10c) bilden.

2. Drehmomentübertragungseinrichtung (1, 1a) nach Anspruch 1, **dadurch gekennzeichnet, dass** die Baueinheit (10, 10a) mittels des Anlasserzahnkranzes (12, 12a) gegenüber dem Drehantriebsteil (2) zentriert ist.

3. Drehmomentübertragungseinrichtung (1c) nach Anspruch 1, **dadurch gekennzeichnet, dass** die Baueinheit (10c) mittels der Flanscheinrichtung (13c) gegenüber dem Drehantriebsteil (2c) zentriert ist.

4. Drehmomentübertragungseinrichtung (1, 1c) nach einem der Ansprüche 1 bis 3, **dadurch gekennzeichnet, dass** Pendelmassen (14) beidseitig an einem Flanschteil (15, 15c) der Flanscheinrichtung (13, 13c) angeordnet sind und axial gegenüberliegende Pendelmassen (14) jeweils miteinander fest zu an dem Flanschteil (15, 15c) verschwenkbar gelagerten Pendelmassenpaaren verbunden sind.

5. Drehmomentübertragungseinrichtung (1a, 1b) nach einem der Ansprüche 1 bis 3, **dadurch gekennzeichnet, dass** die Pendelmassen (14a, 14b) in einem zwischen Trägerscheiben (27a, 27b, 27c) der Flanscheinrichtung (13a, 13b) aufgenommenen Ringraum (28a) aufgenommen und in den Trägerscheiben (27a, 27b, 27c) gelagert sind.

6. Drehmomentübertragungseinrichtung (1b) nach einem der Ansprüche 1 bis 5, **dadurch gekennzeichnet, dass** an der Baueinheit (10b) ein Sensorgeberring (39b) aufgenommen ist.

7. Drehmomentübertragungseinrichtung (1c) nach Anspruch 6, **dadurch gekennzeichnet, dass** der Sensorgeberring (39b) aus einem der beiden Trägerscheiben (27b) gebildet ist.

8. Drehmomentübertragungseinrichtung (1, 1a, 1b, 1c) nach einem der Ansprüche 1 bis 7, **dadurch gekennzeichnet, dass** ein Außenumfang der Flanscheinrichtung (15, 15c) vollständig in einem Innenumfang des Anlasserzahnkranzes (12, 12a, 12b) aufgenommen ist.

9. Baueinheit (10, 10a, 10b, 10c) einer Drehmomentübertragungseinrichtung (1, 1a, 1b, 1c) nach einem der Ansprüche 1 bis 8 mit einem Anlasserzahnkranz (12, 12a, 12b), einem mit dem Anlasserzahnkranz (12, 12a, 12b) verbundenen Fliehkraftpendel (11, 11a, 11b, 11c) sowie Befestigungsmitteln des Anlasserzahnkranzes (12, 12a, 12b) in unmittelbarer Zusammenwirkung mit komplementären Befestigungsmitteln (37) zur Aufnahme an dem Drehantriebsteil (2, 2b, 2c).

10. Verfahren zur Herstellung der Drehmomentübertragungseinrichtung (1, 1a, 1b, 1c) nach einem der Ansprüche 1 bis 8, **dadurch gekennzeichnet, dass** aus einem Anlasserzahnkranz (12, 12a, 12b), einem aus einer Flanscheinrichtung (13, 13a, 13b, 13c) und Pendelmassen (14, 14a, 14b) gebildeten Fliehkraftpendel (11, 11a, 11b, 11c) eine Baueinheit (10, 10a, 10b, 10c) hergestellt wird und die Baueinheit (10, 10a, 10b, 10c) mittels des Anlasserzahnkranzes (12, 12a, 12b) unmittelbar an einem Drehantriebsteil (2, 2b, 2c) der Drehmomentübertragungseinrichtung (1, 1a, 1b, 1c) zentriert aufgenommen und mit diesem fest verbunden wird.

## Claims

1. Torque transmission device (1, 1a, 1b, 1c) for a drive train of a motor vehicle having a rotary drive part (2, 2b, 2c) which is received on a crankshaft, a starter gear ring (12, 12a, 12b) which is connected to the rotary drive part (2, 2b, 2c), and a centrifugal force pendulum (11, 11a, 11b, 11c) with a flange device (13, 13a, 13b, 13c) which is arranged coaxially with respect to the rotary drive part (2, 2b, 2c) and with pendulum masses (14, 14a, 14b) which are distributed on the said flange device over the circumference and can be moved to a limited extent with respect to the said circumference, **characterized in that** the starter gear ring (12, 12a, 12b) and the centrifugal force pendulum (11, 11a, 11b, 11c) form a preassembled structural unit (10, 10a, 10b, 10c) which is received in the preassembled state on the rotary drive part (2, 2b, 2c) and is fastened to the rotary drive part (2, 2b, 2c) exclusively by means of the starter gear ring (12, 12a, 12b).

2. Torque transmission device (1, 1a) according to Claim 1, **characterized in that** the structural unit (10, 10a) is centred with respect to the rotary drive part (2) by means of the starter gear ring (12, 12a).

3. Torque transmission device (1c) according to Claim 1, **characterized in that** the structural unit (10c) is centred with respect to the rotary drive part (2c) by means of the flange device (13c).

4. Torque transmission device (1, 1c) according to one of Claims 1 to 3, **characterized in that** pendulum masses (14) are arranged on both sides on a flange part (15, 15c) of the flange device (13, 13c), and pendulum masses (14) which lie axially opposite one another are connected to one another in each case fixedly to form pendulum mass pairs which are mounted pivotably on the flange part (15, 15c).

5. Torque transmission device (1a, 1b) according to one of Claims 1 to 3, **characterized in that** the pendulum masses (14a, 14b) are received in an annular space (28a) which is received between the carrier discs (27a, 27b, 27c) of the flange device (13a, 13b), and are mounted in the carrier discs (27a, 27b, 27c).

6. Torque transmission device (1b) according to one of Claims 1 to 5, **characterized in that** a sensor encoder ring (39b) is received on the structural unit (10b).

7. Torque transmission device (1c) according to Claim 6, **characterized in that** the sensor encoder ring (39b) is formed from one of the two carrier discs (27b).

8. Torque transmission device (1, 1a, 1b, 1c) according to one of Claims 1 to 7, **characterized in that** an outer circumference of the flange device (15, 15c) is received completely in an inner circumference of the starter gear ring (12, 12a, 12b).

9. Structural unit (10, 10a, 10b, 10c) of a torque transmission device (1, 1a, 1b, 1c) according to one of Claims 1 to 8 having a starter gear ring (12, 12a, 12b), a centrifugal force pendulum (11, 11a, 11b, 11c) which is connected to the starter gear ring (12, 12a, 12b), and fastening means of the starter gear ring (12, 12a, 12b) in direct interaction with complementary fastening means (37) for receiving on the rotary drive part (2, 2b, 2c).

10. Method for producing the torque transmission device (1, 1a, 1b, 1c) according to one of Claims 1 to 8, **characterized in that** a structural unit (10, 10a, 10b, 10c) is produced from a starter gear ring (12, 12a, 12b), and a centrifugal force pendulum (11, 11a, 11b, 11c) which is formed from a flange device (13, 13a, 13b, 13c) and pendulum masses (14, 14a, 14b), and the structural unit (10, 10a, 10b, 10c) is received in a centred manner directly on a rotary drive part (2, 2b, 2c) of the torque transmission device (1, 1a, 1b, 1c) by means of the starter gear ring (12, 12a, 12b), and is connected fixedly to the said rotary drive part (2, 2b, 2c).

## Revendications

1. Dispositif de transfert de couple (1, 1a, 1b, 1c) pour une chaîne cinématique d'un véhicule automobile, comprenant une partie d'entraînement en rotation (2, 2b, 2c) logée sur un vilebrequin, une couronne dentée de démarreur (12, 12a, 12b) connectée à la partie d'entraînement en rotation (2, 2b, 2c) et un pendule à force centrifuge (11, 11a, 11b, 11c) avec un dispositif de bride (13, 13a, 13b, 13c) disposé coaxialement à la partie d'entraînement en rotation (2, 2b, 2c) ainsi que des masses de pendule (14, 14a, 14b) réparties sur celui-ci sur la circonférence et pouvant être déplacées par rapport à celui-ci de manière limitée, **caractérisé en ce que** la couronne dentée de démarreur (12, 12a, 12b) et le pendule à force centrifuge (11, 11a, 11b, 11c) constituent une unité structurelle (10, 10a, 10b, 10c) prémontée et reçue dans l'état prémonté sur la partie d'entraînement en rotation (2, 2b, 2c) et fixée exclusivement au moyen de la couronne dentée de démarreur (12, 12a, 12b) sur la partie d'entraînement en rotation (2, 2b, 2c).

2. Dispositif de transfert de couple (1, 1a) selon la revendication 1, **caractérisé en ce que** l'unité structurelle (10, 10a) est centrée par rapport à la partie d'entraînement en rotation (2) au moyen de la couronne dentée de démarreur (12, 12a).

3. Dispositif de transfert de couple (1c) selon la revendication 1, **caractérisé en ce que** l'unité structurelle (10c) est centrée par rapport à la partie d'entraînement en rotation (2c) au moyen du dispositif de bride (13c).

4. Dispositif de transfert de couple (1, 1c) selon l'une quelconque des revendications 1 à 3, **caractérisé en ce que** des masses pendulaires (14) sont disposées des deux côtés sur une partie de bride (15, 15c) du dispositif de bride (13, 13c) et des masses pendulaires axialement opposées (14) sont à chaque fois connectées ensemble fixement pour former des paires de masses pendulaires supportées de manière pivotante sur la partie de bride (15, 15c).

5. Dispositif de transfert de couple (1a, 1b) selon l'une quelconque des revendications 1 à 3, **caractérisé en ce que** les masses pendulaires (14a, 14b) sont logées dans un espace annulaire (28a) disposé entre des disques de support (27a, 27b, 27c) du dispositif de bride (13a, 13b) et sont supportées dans les disques de support (27a, 27b, 27c) .

6. Dispositif de transfert de couple (1b) selon l'une quelconque des revendications 1 à 5, **caractérisé en ce qu'**un émetteur de détection annulaire (39b) est logé sur l'unité structurelle (10b).

7. Dispositif de transfert de couple (1c) selon la revendication 6, **caractérisé en ce que** l'émetteur de détection annulaire (39b) est constitué de l'un des deux disques de support (27b).

8. Dispositif de transfert de couple (1, 1a, 1b, 1c) selon l'une quelconque des revendications 1 à 7, **caractérisé en ce qu'**une périphérie extérieure du dispositif de bride (15, 15c) est complètement logée dans une périphérie intérieure de la couronne dentée de démarreur (12, 12a, 12b).

9. Unité structurelle (10, 10a, 10b, 10c) d'un dispositif de transfert de couple (1, 1a, 1b, 1c) selon l'une quelconque des revendications 1 à 8, comprenant une couronne dentée de démarreur (12, 12a, 12b), un pendule à force centrifuge (11, 11a, 11b, 11c) connecté à la couronne dentée de démarreur (12, 12a, 12b) ainsi que des moyens de fixation de la couronne dentée de démarreur (12, 12a, 12b) en coopération directe avec des moyens de fixation complémentaires (37) en vue du logement sur la partie d'entraînement en rotation (2, 2b, 2c).

10. Procédé de fabrication du dispositif de transfert de couple (1, 1a, 1b, 1c) selon l'une quelconque des revendications 1 à 8, **caractérisé en ce qu'**à partir d'une couronne dentée de démarreur (12, 12a, 12b), d'un pendule à force centrifuge (11, 11a, 11b, 11c) formé d'un dispositif de bride (13, 13a, 13b, 13c) et de masses de pendule (14, 14a, 14b), une unité structurelle (10, 10a, 10b, 10c) est fabriquée et l'unité structurelle (10, 10a, 10b, 10c) est logée de manière centrée au moyen de la couronne dentée de démarreur (12, 12a, 12b) directement sur une partie d'entraînement en rotation (2, 2b, 2c) du dispositif de transfert de couple (1, 1a, 1b, 1c) et est connectée fixement à celle-ci.
